# EUROPEAN PATENT SPECIFICATION

(11) **EP 4 489 963 B1**
(45) Date of publication and mention of the grant of the patent: **01.04.2026**
(21) Application number: 23707825.8
(22) Date of filing: 23.02.2023
(51) Int. Cl.: B29D 30/46, B26D 3/00, B26D 1/04, B26D 1/16, B26D 1/18, B26D 1/26, B26D 5/02, B26D 7/01, B26D 7/02, B26D 9/00, B26F 3/00

(54) **CUTTING DEVICE AND METHOD FOR CUTTING A TIRE COMPONENT**
SCHNEIDVORRICHTUNG UND VERFAHREN ZUM SCHNEIDEN EINES REIFENBAUTEILS
DISPOSITIF DE COUPE ET PROCÉDÉ DE COUPE D'UN COMPOSANT DE PNEU

(30) Priority: 09.03.2022 NL 2031212
(43) Date of publication of application: 15.01.2025
(73) Proprietor: VMI Holland B.V., 8161 RK Epe (NL)
(72) Inventor: VAN DER KOLK, Anne-Per Joseph Hendrik, 8161 RK EPE (NL); BOUWMEESTER, David Victor, 8161 RK EPE (NL)
(74) Representative: van Houwelingen, Wouter Gerrit
(86) International application number: PCT/NL2023/050089
(87) International publication number: WO 2023/172127

(56) References cited:
- EP-A2- 0 483 973
- EP-A2- 1 262 288
- WO-A1-2012/172462
- WO-A1-2016/097970
- WO-A1-2018/118008
- DE-A1- 102017 218 761
- KR-A- 20090 019 150

## Description

### BACKGROUND

The invention relates to a cutting device for cutting a tire component and a method for cutting a tire component.

EP1262288A2 discloses an apparatus for cutting segments from a strip of multi-layered elastomeric material containing reinforcing cords, the cords being substantially parallel and more or less oriented in the direction of a cutting path, the apparatus characterized by:
a) a cutting blade for cutting the strip to form cut ends, the cutting blade having a cutting edge oriented to cut along a line, the line being tangent to one or more cords and inclined at a desired skive angle;
b) a means for supporting the strip along the cutting path, the means for supporting having a first surface oriented at an angle less than the skive angle and a second surface oriented at an angle greater than or equal to the skive angle;
c) a means for restraining the strip against the means for supporting, the means for restraining being located ahead of the cutting element; and
d) a means for moving the cutting element and the means for restraining.

The restraining means is a wheel that rotates and is moveable along the same path as the cutting means. This wheel traverses directly in front of the cutting path but is at a sufficient distance to enable the strip to lift and pass over the cutting blade as the blade is traversing.

Another cutting device and method for cutting a tire component is disclosed in EP0483973A2.

### SUMMARY OF THE INVENTION

In tire building, tire components, such as a breaker cushion or a gum strip, may taper towards the lateral or longitudinal edges thereof forming tips or wing tips. Due to the tapering thereof, said tips or wing tips may curl up at the lateral edges.

A disadvantage of the known apparatus is that the supporting means is provided with a vacuum system over the entire width thereof. Accordingly, the strip is retained over the entire width thereof as well. As a result, when the blade cuts through the strip, the frictional forces between the strip and the blade surface may cause the blade to 'bite' into the strip material. The biting of the blade into the strip may cause an irregularity which negatively influences the quality of the cut, or the ability to successfully splice the strip during a subsequent process, potentially resulting in an inferior tire. The biting may further damage the strip and/or the blade, requiring the process to be interrupted. Moreover, the damage to the blade may severely reduce the lifetime of the cutting device.

Another disadvantage of the known apparatus is that the wheel of the restraining means approaches the strip laterally while rolling over the supporting means. As a result, the wheel may damage the strip at the curled up wingtips or may even fold said wingtips onto the tire component itself. Since the tire components are usually constituted of strips of unvulcanized or uncured rubber, which are still tacky and/or sticky, the wheel may even stitch the curled up lateral edges onto the tire component itself, thus irreversibly deforming said tire component. As a result, after the tire component has been cut to length, the cut to length tire component may be damaged, misshaped or deformed at or near the cutting line. In other words the tire component may be damaged, misshaped or deformed at the respective leading and/or trailing edges. Said damages, misshaping or deformations render the tire component unusable in the further tire building process or may result in a tire of inferior quality.

It is an object of the present invention to provide a cutting device and method for cutting a tire component which can improve the reliability of the cutting process.

This is achieved by a cutting device for cutting a tire component according to claim 1 and by a method for cutting a tire component according to claim 12.

According to a first aspect, the disclosure provides a cutting device for cutting a tire component having a first lateral edge and a second lateral edge opposite to said first lateral edge, wherein the cutting device comprises a support surface for supporting the tire component in a support plane, wherein the cutting device further comprises a cutter which is movable in a cutting direction along a cutting line for cutting through the tire component on the support surface, wherein the support surface is provided with one or more retaining members for retaining the tire component at or near the cutting line, wherein the one or more retaining members are arranged to retain a preselection of one or more regions of the tire component which are distributed in the cutting direction along the cutting line.

For example, the cutting device may be arranged for retaining the lateral regions of the tire component only. In other words, the central region of the tire component to be cut may be allowed to slightly move when the cutter cuts through the tire component. Hence, biting of the knife into the tire component can be reduced or ultimately prevented. Thus, the quality of the cutting process can be more reliable.

In an embodiment thereof, the preselection of the one or more regions of the tire component is a first preselection, wherein the one or more retaining members are further arranged to retain a second preselection of the one or more regions of the tire component, wherein the second preselection is different from the first preselection. In other words, the configuration of the cutting device can be adapted to the dimensions of the tire component. Moreover, the cutting device may selectively retain any one or more of the regions.

In a further embodiment, the cutting device is arranged to selectively retain the tire component at a first lateral region at the first lateral edge. Preferably, the cutting device is further arranged to selectively retain the tire component at a second lateral region at the second lateral edge. In other words, the cutting device is arranged to allow the central region of the tire component to slightly move with respect to the first region and/or the second region. Hence, the biting of the knife can be reduced or ultimately prevented.

In a further embodiment, the one or more retaining members comprise a first retaining member for retaining the first lateral edge and a second retaining member for retaining the second lateral edge, wherein the first retaining member and the second retaining member are spaced apart in the cutting direction. The retaining members can selectively retain the tire component in the first lateral region and the second lateral region. Preferably, no retaining member is provided at the central region. Hence, the central region of the tire component can be allowed to slightly move.

In an embodiment thereof, the first retaining member and the second retaining member are movable relative to one another in the cutting direction. Hence, the retaining members can each be positioned at a preselected zone. Moreover, the position of the retaining members can be adapted to the lateral dimensions of the tire component.

In a further embodiment thereof, the cutting device comprises a first setting drive for moving the first retaining member. Optionally, the cutting device comprises a second setting drive for moving the second retaining member. The first setting drive and the second setting drive can facilitate the positioning of the first and second retaining elements.

In a further embodiment, the tire component is a first tire component, wherein the cutting device is further arranged for cutting a second tire component arranged parallel to the first tire component, wherein the cutting device further comprises a third retaining element and a fourth retaining element along the cutting line for retaining a first lateral edge and a second lateral edge of said second tire component, respectively. The cutting device can thus be used for subsequently cutting two tire components arranged in parallel. Hence, the cutting process can be more efficient. This can for example be beneficial for the cutting of gum strips or breaker cushions which are generally supplied to a tire assembly process in pairs.

In an embodiment thereof, the first retaining member and the fourth retaining member are symmetrically arranged with respect to a central plane extending transverse to the cutting line, and wherein the second retaining member and the third retaining member are symmetrically arranged with respect to said central plane, wherein the first setting drive is arranged for simultaneously moving the first retaining member and the fourth retaining member in opposite directions with respect to the central plane along the cutting line, and wherein the second setting drive is arranged for simultaneously moving the second retaining member and the third retaining member in opposite directions with respect to the central plane along the cutting line. Said first setting drive and said second setting drive may for example comprise a spindle drive with opposite treads for displacing the respective retaining members. By simultaneously controlling the positions of the first retaining member and the fourth retaining member, and the positions of the second retaining member and the third retaining member, said retaining members can be displaced symmetrically with respect to the central plane. Moreover, the positions of the four retaining members can be controlled using only two drives.

In a further embodiment, the cutting device further comprises a control unit for controlling the first setting drive and the second setting drive. The control unit can automatically set and control the positions of the respective retaining members.

In a further embodiment, the one or more retaining members comprise a plurality of controllable retaining elements distributed in the cutting direction along the cutting line and a control unit for selectively actuating one or more of said retaining elements. By selectively actuating one or more of the retaining elements the tire component can be retained in the pre-selected regions. Preferably, the control unit is arranged for actuating the retaining elements in the first lateral region and/or the second lateral region. The control unit can be arranged to selectively actuate individual retaining elements or groups of retaining elements simultaneously. By actuating individual retaining elements, a higher accuracy can be obtained. By simultaneously actuating groups of retaining elements, the retaining member can be simpler and/or more cost efficient.

In an embodiment thereof, the retaining elements are vacuum cups or vacuum bores, wherein the retaining member further comprises a valve arrangement for selectively applying a vacuum to one or more of the vacuum cups or vacuum bores, wherein the valve arrangement is operationally connected to the control unit. The valve arrangement can be arranged to actuate or switch off individual vacuum cups or vacuum bores, or groups of vacuums cups or vacuum bores.

In a further embodiment, the cutting device further comprises a pressing device, preferably a pressing device as described in the second aspect of the invention, wherein the pressing device is movable in the cutting direction along the cutting line to press the tire component onto the one or more retaining members.

According to a second aspect, the invention provides a cutting device for cutting a tire component having a first lateral edge and a second lateral edge opposite to said first lateral edge, wherein the cutting device comprises a support surface for supporting the tire component in a support plane, wherein the cutting device further comprises a cutter which is movable in a cutting direction along a cutting line for cutting through the tire component on the support surface from the first lateral edge to the second lateral edge, wherein the cutting device further comprises a pressing device which is movable in the cutting direction along the cutting line for pressing the tire component onto the support surface, wherein the cutting device is arranged to actively move the pressing device towards the support plane in a pressing direction transverse or perpendicular to the support plane from a clearance position at a clearance height from said support plane.

The movability of the pressing device in the pressing direction allows the pressing device to approach a lateral edge, in particular the wing or wing tip, of the tire component to be cut in the pressing direction, i.e. from above, instead of in the cutting direction. Hence, the lateral edge of the tire component can be pressed against the support surface without folding said lateral edge over the body of the tire component. Accordingly, the tire component can be cut more reliably.

In an embodiment thereof, the cutting device comprises a pressing drive for driving a movement of the pressing device in the pressing direction. The pressing drive can actively move the pressing device in the pressing direction to approach the lateral edge of the tire component in the pressing direction.

In a further embodiment thereof, the pressing drive comprises a pneumatic actuator, a servomotor, a cam shaft or a cam wheel. These are examples of drives which can actively drive the pressing device in the pressing direction.

In a further embodiment, the cutting device comprises a control unit which is operationally connected to the pressing drive, wherein the control unit is arranged to control the pressing drive to move the pressing device from the clearance position in the pressing direction to press the first lateral edge onto the support surface. The control unit can be arranged to automatically control the pressing drive to engage the lateral edge of the tire component. Alternatively, the control unit can for example be connected to a user interface to enable an operator to control the movement of the pressing drive in the pressing direction.

In a further embodiment thereof, the cutting device comprises a lateral drive for moving the pressing device in the cutting direction along the cutting line, and wherein the control unit is operationally connected to said lateral drive, wherein the control unit is arranged to control the pressing drive and the lateral drive to subsequently:
a) position the pressing device into the clearance position at the clearance height upstream of the tire component relative to the cutting direction;
b) move the pressing device in the cutting direction up to the first lateral edge;
c) move the pressing device from the clearance position in the pressing direction to press the first lateral edge onto the support surface(20); and
d) move the pressing device in the cutting direction from the first lateral edge towards the second lateral edge while applying a pressure force to the tire component in the pressing direction. The control unit can thus automatically press the lateral edge, in particular the wing or wing tip, of the tire component onto the support surface in the pressing direction. The control unit can subsequently press the remainder of the tire component to the support surface by moving the pressing device along the cutting line.

In a further embodiment thereof, the cutting device is arranged to receive the tire component with the first lateral edge aligned along a lateral reference line, and wherein the control unit is arranged to, in step b), move the pressing device in the cutting direction up to the lateral reference line before moving the pressing device in the pressing direction. By aligning the tire component with a predetermined reference line, the pressing device can more accurately press the lateral edge, in particular the wing or wing tip, of the tire component onto the support surface in the pressing direction.

Additionally or alternatively, the cutting device comprises a sensor for detecting the first lateral edge, wherein the sensor is operationally connected to the control unit. In other words, the control unit can automatically detect the first lateral edge. Accordingly, the control unit can automatically move the pressing device in the pressing direction at the location of said lateral edge.

In a further embodiment, the cutting device comprises a guide rail extending over the cutting line along a guide curve, and wherein the pressing device comprises a guide follower for cooperating with said guide rail, wherein the guide curve is shaped to move the pressing device from the clearance position in the pressing direction at the first lateral edge. The guide rail can urge the pressing device in the pressing direction at the lateral edge, in particular at the wing or wing tip, of the tire component without the need for a pressing drive. Preferably, the cutting device comprises a biasing member for biasing the pressing device in the pressing direction. Said biasing member can compensate for a thickness profile of the tire component without the need to adapt the guide curve to said thickness profile.

In a further embodiment, the pressing device is arranged upstream of the cutter in the cutting direction, and wherein the pressing device and the cutter are arranged to move together in the cutting direction along at least a part of the cutting line. Hence, a single lateral drive can move the cutter and the pressing device in the cutting direction.

In a further embodiment, the cutter is a blade comprising a blade body, wherein said blade comprises a first blade surface facing away from the support plane and a second blade surface opposite to the first blade surface with respect to the blade body and facing towards the support plane, wherein the first blade surface and the second blade surface terminate in a cutting edge, wherein the cutting edge extends at an acute skive angle with respect to the support plane, and wherein the cutting edge extends away from the cutting line at an oblique blade angle at a first side of said cutting line. The blade may for example be an ultrasonic blade or a heated blade. The blade angle of the blade can affect a tapered leading edge and trailing edge of the tire component on the respective sides of the cutting line. The skive angle of the blade can reduce a force required to move the blade in the cutting direction through the material of the tire component.

In a further embodiment, the cutting device further comprises a conveyor for conveying the tire component in a transport direction transverse or perpendicular to the cutting line, wherein the conveyor forms at least a part of the support surface. The conveyor can convey the tire component towards and/or away from the cutting line. Preferably, the cutting device comprises a first conveyor upstream of the cutting line in the transport direction and a second conveyor downstream of the cutting line in the transport direction.

In an embodiment thereof, the pressing device is arranged upstream of the cutting line in the transport direction. Preferably, the cutting device further comprises a clamping element, such as a clamping bar or a clamping roller, for pressing the tire component on the support surface downstream of the cutting line in the transport direction. Alternatively, the pressing device may be arranged downstream of the cutting line in the transport direction.

In a further embodiment, the support surface is provided with one or more retaining members for retaining the tire component at or near the cutting line, and wherein the pressing device is movable along the cutting line for pressing the tire component onto said one or more retaining members. Preferably, at least one of said one or more retaining members is arranged at the first lateral edge of the tire component. Hence, said at least one retaining element can retain the lateral edge, in particular the wing or wingtip, of the tire component after said lateral edge has been pressed towards the support surface by the pressing device. Moreover, by pressing the tire component onto the one or more retaining members, said one or more retaining members can retain the tire component more reliably.

In an embodiment thereof, the retaining members comprise vacuum cups for retaining the tire component. Alternatively, the retaining members may for example comprise retractable needles that can be inserted into the material of the tire component.

In a further embodiment, the clearance height is more than five millimetres, preferably between ten and one hundred millimetres, more preferably between twenty and eighty millimetres, most preferably, between twenty-five and sixty millimetres. Said clearance height can allow a clearance position above a wing or wing tip of the tire component. Hence, the wing or wing tip of the tire component can reliably be pressed onto the support surface. The preferred range can allow a shorter stroke of the pressing device in the pressing direction. Hence, the process efficiency of the cutting device can be improved.

In a further embodiment, the pressing device comprises a pressing roller or pressing wheel which is rotatable about a rotation axis that extends transverse to the cutting line and parallel to the support plane, wherein the pressing roller or pressing wheel is arranged to roll over the tire component in the cutting direction. Preferably the pressing roller or the pressing wheel is arranged to roll over the tire component while a pressing force is applied to said pressing roller or pressing wheel in the pressing direction. The pressing roller or pressing wheel can reliably press the tire component onto the support surface.

According to a third aspect, the disclosure provides a method for cutting a tire component along a cutting line, wherein the method comprises the steps of:
a) providing the tire component at the cutting line;
b) retaining a first lateral region of the tire component at the cutting line at a first lateral edge of said tire component while allowing a central region of the tire component between the first lateral edge and a second lateral edge opposite to said first lateral edge to freely move with respect to the first lateral region; and
c) cutting through the tire component from the first lateral edge in a cutting direction transverse to said first lateral edge.

By retaining the first lateral region and allowing the central region of the tire component to freely move with respect to the said first lateral region, when the cutter cuts through the tire component, biting of the knife into the tire component can be reduced or ultimately prevented. Thus, the quality of the cutting process can be more reliable.

In an embodiment thereof, step b) further comprises retaining a second lateral region of the tire component at a second lateral edge of said tire component opposite to the first lateral edge, wherein the central region is located between the first lateral region and the second lateral region.

In a further embodiment thereof, the method comprises, prior to step b), the step of positioning a first retaining member along the cutting line at the first lateral region for retaining said first lateral region.

Additionally or alternatively, the method comprises, prior to step b), the step of positioning a second retaining member at the second lateral region for retaining said second lateral region. The retaining members can selectively retain the tire component in the first lateral region and the second lateral region. Preferably, no retaining member is provided at the central region. Hence, the central region of the tire component can be allowed to slightly move.

In an alternative embodiment, the method comprises the step of providing a retaining member having a plurality of retaining elements distributed along the cutting line, wherein step b) comprises selectively actuating the retaining elements at the first lateral region and/or the second lateral region. By actuating individual retaining elements, a higher accuracy can be obtained. By simultaneously actuating groups of retaining elements, the retaining member can be simpler and/or more cost efficient.

In a further embodiment, the method comprises using a cutting device according to the first aspect of the present invention or the second aspect of the present invention.

According to a fourth aspect, the invention provides a method for cutting a tire component along a cutting line, wherein the method comprises the steps of:
a) providing the tire component at the cutting line on a support surface extending in a support plane;
b) pressing a first lateral edge of the tire component onto the support surface at the cutting line by moving a pressing device in a pressing direction transverse to the support plane;
c) moving the pressing device along the cutting line from the first lateral edge to a second lateral edge of the tire component opposite to the first lateral edge while applying a pressing force onto the tire component in the pressing direction; and
d) cutting through the tire component along the cutting line.

By pressing the pressing device in the pressing direction said pressing device can approach a lateral edge, in particular the wing or wing tip, of the tire component to be cut in the pressing direction, i.e. from above, instead of in the cutting direction. Hence, the lateral edge of the tire component can be pressed against the support surface without folding said lateral edge over the body of the tire component. Accordingly, the tire component can be cut more reliably.

In an embodiment thereof, the support surface comprises one or more retaining members at the cutting line for retaining the tire component, wherein step b) comprises pressing the tire component on the one or more retaining members. The retaining members can reliably retain the tire component when said tire component has been pressed down by the pressing device.

In a further embodiment, step a) comprises aligning the first lateral edge along a lateral reference line. Additionally or alternatively, the method comprises, prior to step b), the step of detecting the first lateral edge. Hence, the lateral location of the movement of the pressing device in the pressing direction can be predetermined. Hence, said pressing device can press the lateral edge onto the support surface more accurately.

In a further embodiment, the method comprises using the cutting device according to any of the first aspect or the second aspect of the present invention.

### BRIEF DESCRIPTION OF THE DRAWINGS

The invention will be elucidated on the basis of an exemplary embodiment shown in the attached schematic drawings, in which:
figures 1-4 show a cutting device according to an embodiment of the present invention during exemplary steps of cutting a tire component;
figure 5 shows a section view according to the line V-V in figure 1;
figures 6 shows a section view according to the line VI-VI in figure 2;
figure 7 shows the section view of figure 6 during a further method step;
figure 8 shows a section view according to the line VIII-VIII in figure 3;
figure 9 shows the section view of figure 8 during a further method step;
figure 10 shows a section view according to the line X-X in figure 4;
figure 11 shows a section view of an alternative cutting device according to an alternative embodiment of the present invention; and
figure 12 shows a section view of a further alternative cutting device according to a further alternative embodiment of the present invention.

### DETAILED DESCRIPTION OF THE INVENTION

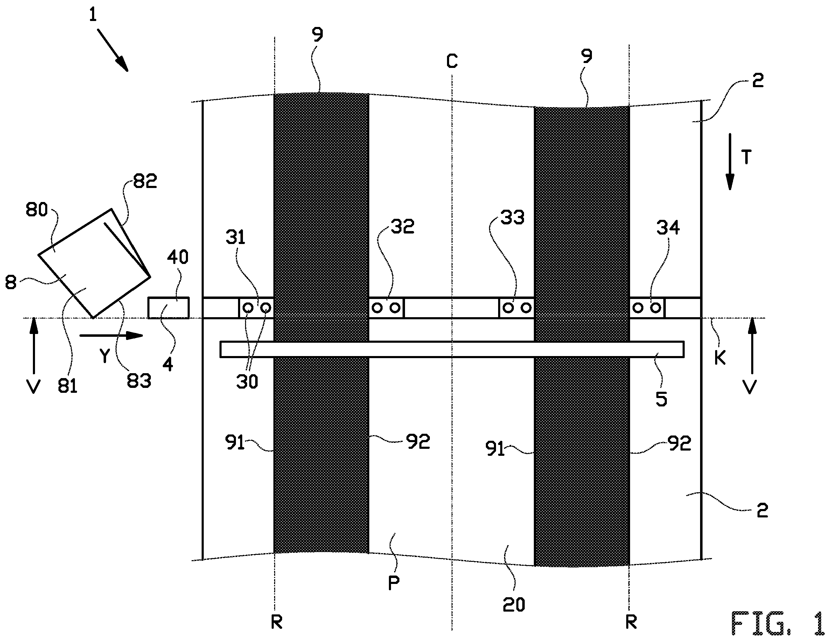

Figures 1-10 show a cutting device 1 for cutting a tire component 9 according to an embodiment of the present invention. In particular, the cutter 1 is arranged for cutting through the tire components 9 from a first longitudinal or lateral edge 91 to a second longitudinal or lateral edge 92 thereof. Said first lateral edge 91 and said second lateral edge 92 extend in the lateral direction of the tire component 9. Preferably, said tire component 9 is an unvulcanised or uncured tire component, such as a breaker cushion or a gum strip.

In the embodiment as shown, the cutting device 1 is arranged for subsequently cutting through two tire components 9. The two tire components 9 are arranged on either or both sided of a central plane C. After cutting, both tire components 9 may for example be simultaneously applied to a tire building drum (not shown) such as a carcass drum. The respective longitudinal directions of said tire components 9 extend in parallel or substantially in parallel.

As is best shown in figures 1-4, the cutting device 1 comprises a support surface 20 for supporting the tire components 9. The support surface 20 extends in a support plane P. The cutting device 1 further comprises a cutter 8 for cutting through the tire components 9 along a cutting line K. Said cutting line K extends across the support plane P in a cutting direction Y. The cutter 8 may for example comprise an ultrasonic blade or a heated knife.

In the embodiment as shown, the cutter 8 is a blade. The cutter 8 comprises a blade body 80 having a first blade surface 81 and a second blade surface 82 terminating in a cutting edge 83. The second blade surface 82 is located opposite to the first blade surface 81 with respect to the blade body 80. The first blade surface 81 faces away from the support plane P. Accordingly, the second blade surface 82 faces towards the support plane P.

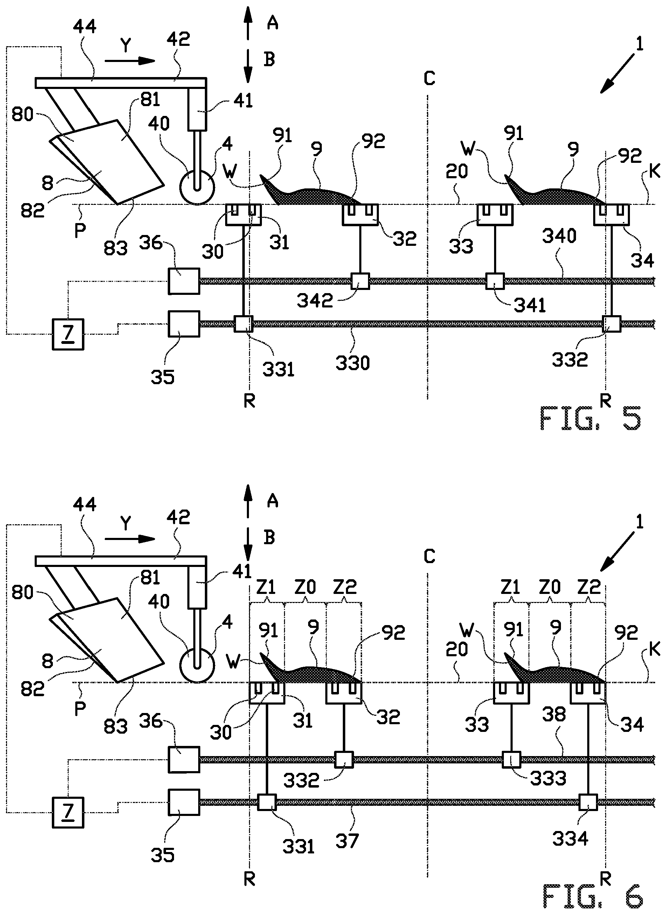

As can best be seen in figure 1-4, the cutting edge 83 extends away from the cutting line K at an oblique blade angle at a first side of said cutting line K. The blade angle is defined about an axis perpendicular to the support plane P. As is shown in figures 5-10, the cutting edge 83 further extends at an acute skive angle with respect to the support plane P. Consequently, when the cutter 8 cuts through the tire component 9, downstream of the cutter 8 in the cutting direction Y, an inclined leading end LE is formed to the tire component 9 at the first side of the cutting line K. Accordingly, an inversely inclined trailing end TE is formed to the elastomeric profile 9 at a second side of the cutting K opposite to the first side.

In the embodiment as shown, the cutting device 1 comprises two conveyors 2 for conveying the tire components 9 in a transport direction T. Preferably, the respective longitudinal directions of the tire components 9 are in line with the transport direction T. The conveyors 2 form a part of the support surface 20. Additionally or alternatively, the cutting device 1 may for example be provided with a cutting table to constitute at least a part of the support surface 20.

As is further shown in figure 1-10 the cutting device 1 comprises a first retaining member 31 and a second retaining member 32 for retaining a first one of the two tire components 9 during the cutting thereof. The cutting device 1 further comprises a third retaining member 33 and a fourth retaining member 34 for retaining a second one or the other one of the two tire components 9 during the cutting thereof. In particular, the first retaining member 31, the second retaining member 32, the third retaining member 33 and the fourth retaining member 34 form a part of the support surface 20. In other words, the support surface 20 is provided with the first retaining member 31, the second retaining member 32, the third retaining member 33 and the fourth retaining member 34. The first retaining member 31, the second retaining member 32, the third retaining member 33 and the fourth retaining member 34 are arranged along the cutting line K.

In this particular embodiment, the first retaining member 31, the second retaining member 32, the third retaining member 33 and the fourth retaining member 34 are arranged upstream of the cutting line K in the transport direction T. The cutting device 1 further comprises a clamping element 5, such as a clamp bar or a clamp roll, for clamping the tire component downstream of the cutting line K in the transport direction T. Alternatively, the retaining members 31, 32, 33, 34 may be arranged at the cutting line or downstream of the cutting line K in the transport direction T.

As is best shown in figures 5-10, the first retaining member 31 and the second retaining member 32 are movable relative to each other in the cutting direction Y. In particular, the first retaining member 31 is movable in the cutting direction Y to position said first retaining member 31 at the first lateral edge 91. The first retaining member 31 is arranged for retaining a first lateral region Z1 of the tire component 9 at said first lateral edge 91. Accordingly, the second retaining member 32 is movable in the cutting direction Y to position said second retaining member 32 at the second lateral edge 92. The second retaining member 32 is arranged for retaining a second lateral region Z2 of the tire component 9 at said second lateral edge 92.

As can further be seen in figures 6-10, a central region Z0 of the tire component 9 is defined between the first lateral region Z1 and the second lateral region Z2 in the cutting direction Y. Said central region Z0 is not directly retained by the first retaining member 31 or the second retaining member 32. Instead, said central region Z0 may be allowed to slightly move relative to the first lateral region Z1 and the second lateral region Z2. For example, the central region Z0 may locally extend or compress in the cutting direction Y in reaction to the cutter 8 cutting through the tire component 9.

Preferably, as is best shown in figures 5-10, the first lateral edge 91 is aligned along a lateral reference line R. Hence, the first retaining member 31 can be positioned at said lateral reference line R. The second lateral edge 92 may be positioned in accordance with a predetermined width of the tire component 9 between the first lateral edge 91 and the second lateral edge 92. Alternatively, the respective positions of the first retaining member 31 and the second retaining member 32 along the cutting line may for example be adjusted manually, i.e. by an operator of the cutting device 1.

In this particular embodiment, the cutting device comprises a first setting drive 35 for driving the movement of the first retaining member 31 back and forth in the cutting direction Y. The first setting drive 35 comprises a first spindle 37 and an associated first spindle nut 331. Said first spindle nut 331 is movable in the cutting direction Y by a rotation of the first spindle 37. The first spindle nut 331 is coupled to the first retaining member 31 for moving said first retaining member 31 in the cutting direction Y.

Accordingly, the cutting device 1 comprises a second setting drive 36 for driving the movement of the second retaining member 32 in the cutting direction Y. The second setting drive 36 comprises a second spindle 38 and an associated second spindle nut 332 which is coupled to the second retaining member 32.

Alternatively, the first spindle nut 331 and the second spindle nut 332 may be coupled to a single spindle having opposite treads at the first spindle nut 331 and the second spindle nut 332. Hence, said first spindle nut 331 and said second spindle nut 332 may be movable with respect to one another using only a single spindle.

Analogue to the first retaining member 31 and the second retaining member 32, the third retaining member 33 and the fourth retaining member 34 are movable relative to each other in the cutting direction Y as well. The third retaining member 33 is movable in the cutting direction Y to position said third retaining member 33 at the first lateral edge 91 of the second tire component 9. Accordingly, the fourth retaining member 34 is movable in the cutting direction Y to position said fourth retaining member 34 at the second lateral edge 92 of the second tire component 9. In particular, said third retaining member 33 and said fourth retaining member 34 are arranged for respectively retaining a first lateral region Z1 at the first second lateral region Z2 of the second tire component 9 at the second lateral edge 92 of the second tire component 9. Preferably, the second lateral edge 92 of the second tire component 9 is aligned with a further lateral reference line R.

In the embodiment as shown in figures 5-10, the third retaining member 33 is coupled to a third spindle nut 333 associated with the second spindle 38. Accordingly, the fourth retaining member 34 is coupled to a fourth spindle nut 334 associated with the first spindle 37. In other words, the first setting drive 35 is arranged for simultaneously adjusting the respective positions of the first retaining member 31 and the fourth retaining member 34 in the cutting direction Y. Accordingly, the second setting drive 36 is arranged for simultaneously adjusting the respective positions of the second retaining member 32 and the third retaining member 33 in the cutting direction Y. The first spindle 37 has reversed or opposite treads on the respective sides of the central plane C, such that a rotation of the spindle 37 causes the first retaining member 31 and the fourth retaining member 34 to move in opposite directions along the cutting line K. Analogously, the second retaining member 32 and the third retaining member 33 are arranged to move in opposite directions along the cutting line upon a rotation of the second spindle 38. Preferably, the first retaining member 31 and the fourth retaining member 34 are arranged to move symmetrically with respect to the central plane C. Accordingly, the second retaining member 32 and the third retaining member 33 are arranged to move symmetrically with respect to the central plane C.

The first retaining member 31, the second retaining member 32, the third retaining member 33 and the fourth retaining member 34 each comprise one or more retaining elements 30 for retaining the respective tire components 9. Said retaining elements 30 may for example comprise vacuum cups, vacuum bores or vacuum holes. Preferably, the vacuum cups, vacuum bores or vacuum holes have an increased diameter or surface area at the support plane P. In other words, the respective openings of the vacuum cups, vacuum bores or vacuum holes debouching into the support plane P have an increased diameter or surface area as compared to the diameter or surface area below the support plane P. This may reduce the vacuum force needed to retain the tire component 9.

Alternatively, the retaining elements may for example comprise retractable needles. When handling tire components comprising metal reinforcement cords, the retaining elements may for example comprise magnets. When handling tacky or sticky tire components, in particular uncured or unvulcanised tire components, such as a breaker cushion or a gum strip, the retaining elements 30 may comprise a smooth or polished metal surface. In particular, the retaining elements 30 may comprise a retaining surface having a better adherence than the surrounding support surface 20.

As is shown in figures 1-10, the cutting device 1 further comprises a pressing device 4 for pressing the tire components 9 onto the first retaining member 31, the second retaining member 32, the third retaining member 33 and the fourth retaining member 34. In particular, the pressing device 4 is arranged for pressing the tire components 9 onto the first retaining member 31, the second retaining member 32, the third retaining member 33 and the fourth retaining member 34 in a pressing direction B towards the support plane P. Said pressing direction B is transverse of perpendicular to the support plane P.

The pressing device 4 is movable in the cutting direction Y along the cutting line K. Preferably, the pressing device 4 is movable along the cutting line K together with the cutter 8. In this embodiment, the cutting device 1 comprises a common base 44 for supporting the cutter 8 and the pressing device 4. Said common base 44 is movable in the cutting direction Y along the cutting line K. Alternatively, the pressing device 4 may be movable along the cutting line K independent of the cutter 8. Hence, the pressing device 4 may press the tire components 9 to the respective retaining members 31, 32, 33, 34 prior to cutting.

The pressing device 4 comprises a pressing roller or pressing wheel 40 which is rotatable about a rotation axis transverse or perpendicular to the cutting line K. Said rotation axis extends parallel or substantially parallel to the support plane P. Preferably, the pressing roller or pressing wheel 40 is freely rotatable about the rotation axis thereof. The pressing roller or pressing wheel 40 is arranged to roll over the tire component 9 in the cutting direction K while a pressing force is applied to said pressing roller or pressing wheel 40 in the pressing direction B.

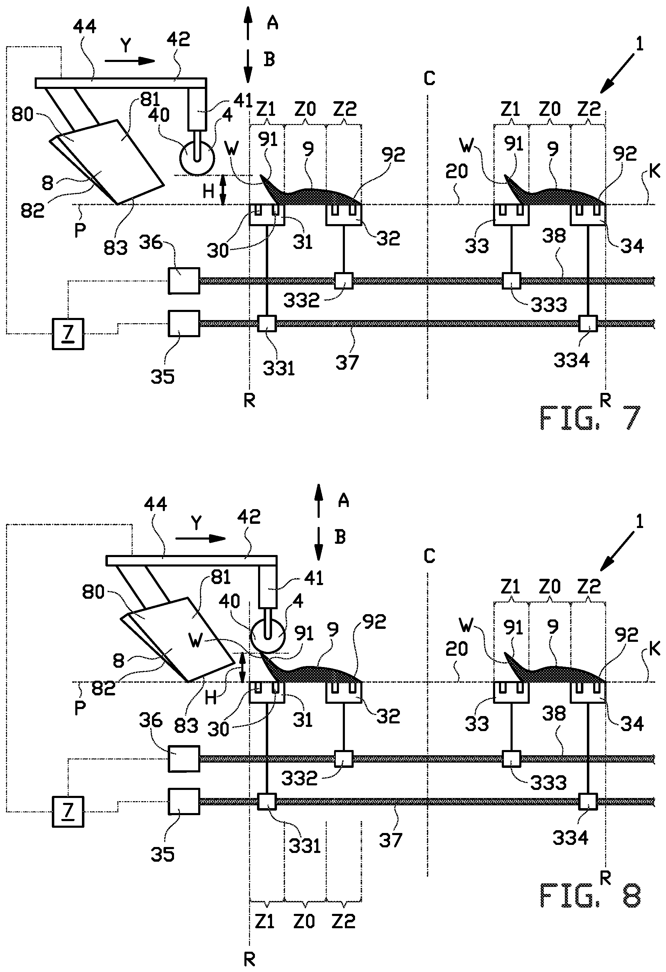

As is best seen in figures 7 and 8, the pressing device 4 is movable in the pressing direction B towards the support plane P and in a clearance direction A away from the support plane P. Said clearance direction A is transverse or perpendicular to the support plane P. Preferably, the clearance direction A is opposite to the pressing direction B.

As is shown in figures 5-8, the tire component 9 forms a wing or wing tip W at the first lateral edge 91 thereof. Said wing or wing tip W is curled upwards, i.e. away from the support plane P. The pressing device 4, in particular the pressing roller or pressing wheel 40, is movable in the clearance direction A into a clearance position spaced apart form the support plane P at a clearance height H. Preferably, said clearance height H is sufficiently large to allow the pressing roller or pressing wheel 40 to be moved in the cutting direction Y without colliding with the wing or wing tip W of the tire component 9. The clearance height H may for example be a predetermined and/or pre-set height. Alternatively, the cutting device 1 may comprise one or more sensors (not shown) for measuring a required height, e.g. the height of the wing or wing tip W with respect to the support plane P. Accordingly, the clearance height H may be set at or above the measured required height. Preferably, said clearance height H is more than five millimetres to allow the pressing device 4, in particular the pressing roller or the pressing wheel 40, to pass over the wing tip W. Preferably, the clearance height H is between ten and one hundred millimetres. More preferably, the clearance height H is between twenty and eighty millimetres. Most preferably, the clearance height H is between twenty-five and sixty millimetres.

As is further shown in figures 5-10, the cutting device 1 comprises a pressing drive 41 for driving the movement of the pressing device 4 in the pressing direction B and the clearance direction A. In particular, the pressing drive 41 is arranged to drive the pressing roller or pressing wheel 40 in the pressing direction B and the clearance direction A relative to the common base 44. The pressing drive 41 may for example comprise a linear drive, such as a pneumatic cylinder. Alternatively, the pressing drive 41 may for example comprise a servomotor and/or a crank shaft, a cam shaft or cam wheel to affect the movement of the pressing device 4 in the pressing direction B and the clearance direction B.

The cutting device 1 further comprises a lateral drive 42 for driving the pressing device 4 in the cutting direction Y. In particular the lateral drive 42 is arranged for driving the common base 44 in the cutting direction Y. Alternatively, when the cutter 8 and the pressing device 4 are individually movable in the cutting direction Y, the cutting device 1 may additionally comprise a lateral cutter drive (not shown) for driving the movement of the cutter in the cutting direction Y.

As is further shown in figures 6-10, the cutting device 1 further comprises a control unit 7. In this exemplary embodiment, the control unit 7 is operably and/or functionally connected to the pressing drive 41, the lateral drive 42, the first setting drive 35 and the second setting drive 36. The cutting device 1 may further comprises one or more sensors (not shown) for detecting the first lateral edge 91. The one or more sensors are operationally connected to the control unit 7 as well. Said one or more sensors may for example comprise a line camera or a probe.

The control unit 7 is arranged to position the retaining members 31, 32, 33, 34 at the respective lateral regions Z1, Z2 of the tire components 9. The control unit 7 may for example be arranged control the first lateral drive 35 to position the first retaining member 31 and the fourth retaining member 34 along the respective lateral reference lines R. Additionally or alternatively, the control unit 7 may be arranged to position the first retaining member 31 and the fourth retaining member 34 along the first lateral edge 91 of the first tire component 91 and the second lateral edge 92 of the second tire component 9, respectively, in response to signals of the one or more sensors.

The control unit 7 may further be arranged to control the second lateral drive 36 to position the second retaining member 32 and the third retaining member 33 at the respective second lateral region Z2 of the first tire component 9 and the first lateral region Z1 of the second tire component 9. The control unit 7 may for example be arranged to position said retaining member 32 and said third retaining member 33 at a predetermined distance with respect to the first retaining member 31 and the fourth retaining member 34, respectively. The control unit 7 may be derived to determine said predetermined distance for example from a predetermined or measured width of the tire component 9.

The control unit 7 is further arranged to control the pressing drive 41 to move the pressing device 4 from the clearance position in the pressing direction B to press the first lateral edge 91, in particular the wing or wing tip W, of the first tire component onto the first retaining member 31. In particular, the control unit 7 is arranged to control the pressing drive 41 to move the pressing device 4 in the pressing direction B at or near the lateral reference line R. Additionally, the control unit 7 may be operationally connected to the one or more sensors for measuring a required height. Preferably, the control unit 7 is arranged to set the clearance height H in response to the measured required height.

Preferably, the control unit 7 controls both the lateral drive 42 and the pressing drive 41 to affect the movement of the pressing device 4 in the pressing direction B to press the first lateral edge 91 at the first retaining member 31.

A method for cutting the tire component 9 will now be further discusses using figures 1-10.

As is shown in figures 1 and 5, the two tire components 9 have been placed on the support surface 20 at the cutting line K. The tire components 9 may for example have been transported past the cutting line K in the transport direction T by the conveyor 2 upstream of the cutting line K in the transport direction T. The tire components 9 are each located on a respective side of the central plane C. In particular, the tire components 9 are symmetrically arranged with respect to the central plane C. The first lateral side 91 of the first tire component 9 has been aligned with the reference line R. Accordingly, the second lateral sider 92 of the second or further tire component 9 has been aligned with the second or further reference line R. Downstream of the cutting line K in the transport direction T, the tire components 9 are clamped by the clamping element 5.

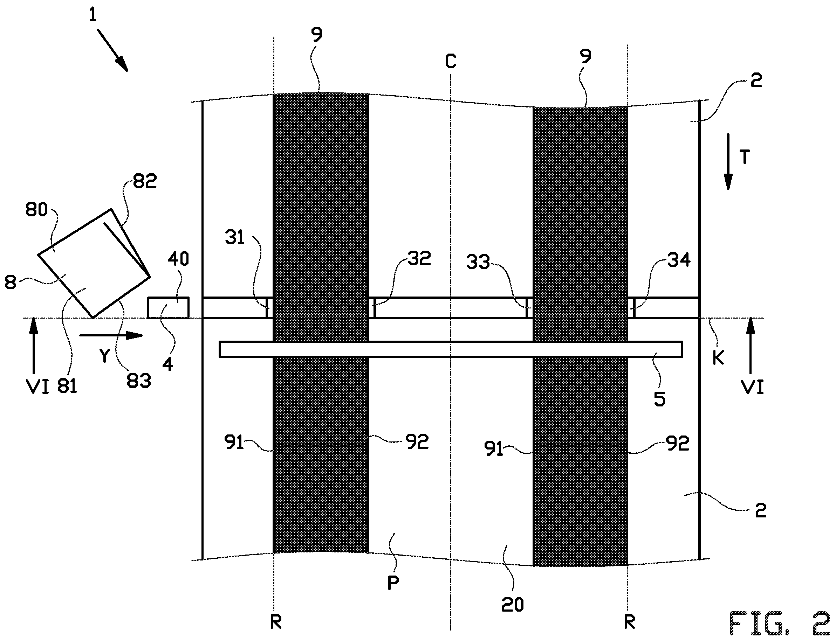

As is shown in figures 2 and 6, the retaining members 31, 32, 33, 34 have been moved to the respective lateral edged 91, 92 of the tire components. In particular, the first setting drive 35 is driven to move the first retaining member 31 and the fourth retaining member 34 in opposite directions in the cutting direction Y. The first retaining member 31 and the fourth retaining member 34 are moved into alignment with the respective reference lines R. Accordingly, the second setting drive 36 is driven to move the second retaining member 32 and the third retaining member 33 in opposite direction in the cutting direction Y. Preferably, the positions of the retaining member 31, 32, 33, 34 along the cutting line K are pre-set based on the dimensions of the tire components 9. Hence, the retaining members 31, 32, 33, 34 need only to be moved when adapting to tire components 9 having a different width in the cutting direction Y and/or tire components with a different mutual spacing in the cutting direction Y.

As is shown in figure 7, the pressing roller or pressing wheel 40 has been positioned in the clearance position at the clearance height H with respect to the support plane P. In particular, the pressing drive 41 has been activated to move the pressing roller or pressing wheel 40 in the clearance direction A towards the clearance position.

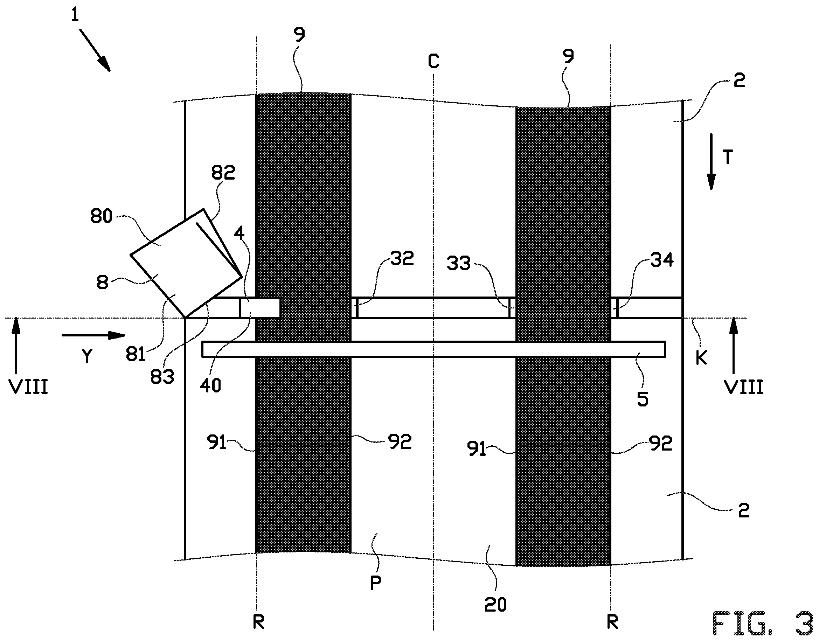

As is shown in figures 3 and 8, the pressing device 4 has been displaced in the cutting direction Y towards the first lateral edge 91 of the first tire component 9. In particular, the pressing roller or pressing wheel 40 has been displaced in the cutting direction Y into a predetermined position relative to the lateral reference line R. As is best shown in figure 8, in said predetermined position, the pressing roller or pressing wheel 40 is positioned above the wing tip W of the tire component 9.

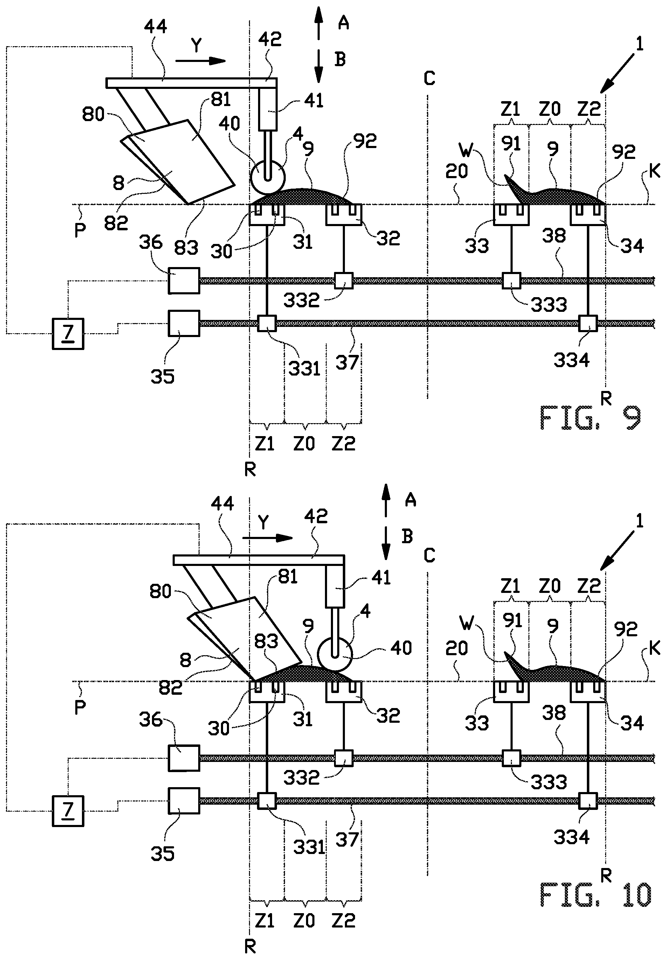

Next, as is shown in figure 9, the pressing drive 41 has been actuated to displace the pressing device 4 in the pressing direction B. The pressing roller or pressing wheel 40 has pressed the first lateral edge 91 or the wing tip W onto the first retaining element 31. Said first retaining element 31 is now at least partially retaining the first lateral region Z1 of the tire component 9.

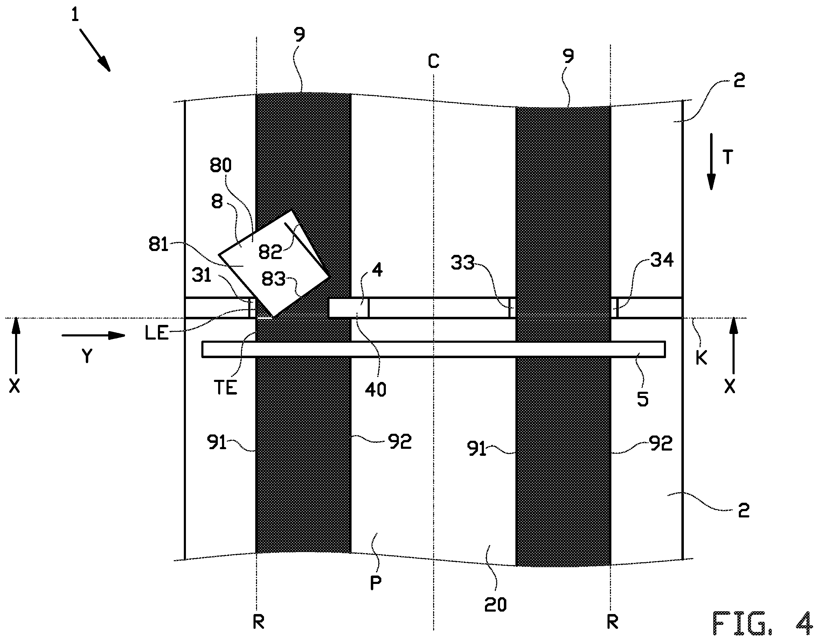

As is further shown in figures 4 and 10, the pressing device 4 has been displaced further in the cutting direction Y. Said pressing device 4 is now pressing the second lateral region Z2 of the tire component 9 onto the second retaining element 32. Accordingly, the cutter 8 has been displaced in the cutting direction Y together with the pressing device 4. As is best shown in figure 4, the cutter 9 cuts into the tire component 8 along the cutting line K, thus forming a leading edge LE and a trailing edge TE on the respective sides of the cutting line K.

After the first tire component 9 has been cut, the abovementioned steps are repeated for the second tire component 9. The cutter 8 and the pressing device 4 are then returned to their initial positions. Subsequently, the tire components 9 may be transferred in the transport direction T and the entire cutting process may be repeated.

Optionally, when the retaining elements 30 comprise vacuum cups or vacuum bores, the method may further comprise the step of applying a positive pressure to said vacuum cups or bores. In particular, a gaseous medium, preferably air, is supplied to said vacuum cups or bores. The gaseous medium may help releasing the tire component 9 from the retaining elements 30. Moreover, the gaseous medium may remove accumulated debris or contamination from the vacuum cups or bores.

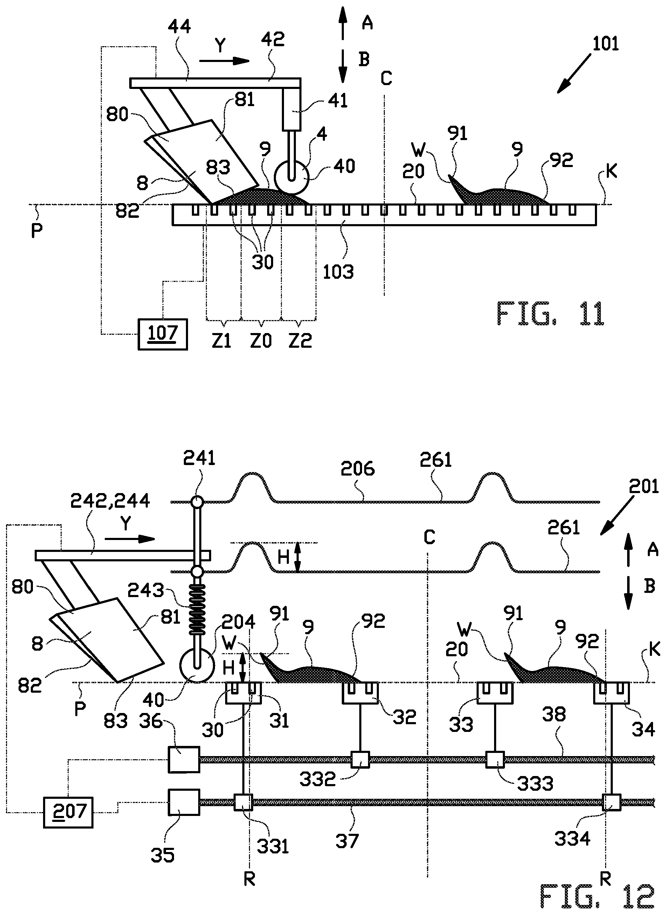

Figure 11 shows an alternative cutting device 101 according to a further embodiment of the present invention. The cutting device 101 differs from the previously discussed cutting device 1 in that it comprises an alternative retaining member 103.

The retaining member 103 comprises a plurality of retaining elements 30 for retaining the tire component 9. The retaining elements 30 are distributed along the cutting line K. Preferably, said retaining elements 30 are equally distributed along the cutting line K. In other words, the retaining elements 30 are distributed at equal intervals. The retaining elements 30 are selectively controlled by the control unit 107. Said control unit 107 is arranged to actuate the retaining elements 30 within the first lateral region Z1 and the second lateral region Z2 of the tire component 9. Preferably, the retaining elements 30 within the central region Z0 are not actuated to allow said central region Z0 to move with respect to the first lateral region Z1 and the second lateral region Z2.

In the embodiment as shown, the retaining elements 30 are vacuum bores or vacuum cups. Alternatively, the retaining elements 30 for example be retractable needles which may be driven in the tire component, or magnets which may retain tire components comprising embedded metal chords. The cutting device 1 further comprises a valve arrangement 130 for selectively operating one or more of the retaining elements 30. Said valve arrangement 130 is operationally connected to the control unit 107.

Figure 12 shows a further alternative cutting device 201 according to a further embodiment of the present invention. The cutting device 201 differs from the initially described cutting device 1 in that it comprises an alternative pressing device 204 and a guide system 206 for guiding said pressing device 204. The guide system 206 replaces the pressing drive 41.

As is shown in figure 12, the guide system 206 comprises two guide rails 261 which are arranged along the cutting line K. In particular, said guide rails 261 are arranged above the support plane P in the clearance direction A. The pressing device 204 is freely movable in the clearance direction A and the pressing direction B relative to the common base 244. The pressing device 204 comprises two guide followers 241 each cooperating with a respective one of the guide rails 261 to move the pressing device 204 relative to the common base 204 in the clearance direction A and the pressing direction B.

The guide rails 261 each extend along a guide rail path. Said guide rail path is defined as height profile with respect to the support plane P. The height profile is designed to lift the pressing device 204 over the clearance height H in the clearance direction A upstream of the lateral reference line R in the cutting direction Y. The height profile is further designed to urge the pressing device 204 in the pressing direction B at or near the lateral reference line R.

Preferably, the pressing device 204 further comprises a biasing element 243 for exerting a biasing force on the tire component 9 in the pressing direction B. The biasing element 243 may further account for variations in the thickness of the tire component 9 in the clearance direction A by allowing the pressing device 204 to be displaced in the clearance direction against the biasing force. Although not shown in figures 5-11, the previously described cutting devices 1, 101 may be provided with a similar biasing element.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary, the invention relates to a cutting device for cutting a tire component, wherein the cutting device comprises a support surface for supporting the tire component, a cutter which is movable along a cutting line for cutting through the tire component on the support surface, and a pressing device which is movable along the cutting line for pressing the tire component onto the support surface, wherein the cutting device is arranged to move the pressing device from a first position at the support plane to a second position at a clearance height from said support plane in a clearance direction transverse or perpendicular to the support plane, and from the second position towards the first position in a pressing direction opposite to the clearance direction.

### REFERENCE NUMERALS

- 1: cutting device
- 2: conveyor
- 20: support surface
- 30: retaining element
- 31: first retaining member
- 32: second retaining member
- 33: third retaining member
- 34: fourth retaining member
- 35: first setting drive
- 36: second setting drive
- 37: first spindle
- 38: second spindle
- 331: first spindle nut
- 332: second spindle nut
- 333: third spindle nut
- 334: fourth spindle nut
- 4: pressing device
- 40: pressing wheel
- 41: pressing drive
- 42: lateral drive
- 44: common base
- 5: clamping element
- 7: control unit
- 8: cutter
- 80: blade body
- 81: first blade surface
- 82: second blade surface
- 83: cutting edge
- 9: tire component
- 91: first lateral side
- 92: second lateral side

- 101: alternative cutting device
- 103: alternative retaining element
- 105: valve arrangement
- 107: alternative control unit

- 201: alternative cutting device
- 204: alternative pressing device
- 241: guide follower
- 242: alternative lateral drive
- 243: biasing element
- 244: alternative common base
- 206: guide system
- 261: guide rail
- 207: alternative control unit

- LE: leading end
- TE: trailing end

- A: clearance direction
- B: pressing direction
- C: Central plane
- H: clearance height
- K: cutting line
- P: support plane
- R: lateral reference line
- T: transport direction
- W: wing tip
- Y: cutting direction
- Z0: central region
- Z1: first lateral region
- Z2: second lateral region

## Claims

1. Cutting device for cutting a tire component having a first lateral edge and a second lateral edge opposite to said first lateral edge, wherein the cutting device comprises a support surface (20) for supporting the tire component in a support plane (P), wherein the cutting device further comprises a cutter (8) which is movable in a cutting direction along a cutting line (K) for cutting through the tire component on the support surface from the first lateral edge to the second lateral edge, wherein the cutting device further comprises a pressing device (4) which is movable in the cutting direction along the cutting line (K) for pressing the tire component onto the support surface (20),
**characterized in that** the cutting device is arranged to actively move the pressing device (4) towards the support plane (P) in a pressing direction transverse or perpendicular to the support plane (P) from a clearance position at a clearance height from said support plane (P).

2. Cutting device according to claim 1 wherein the cutting device comprises a pressing drive for driving a movement of the pressing device in the pressing direction,
preferably wherein the pressing drive comprises a pneumatic actuator, a servomotor, a cam shaft or a cam wheel.

3. Cutting device according to claim 2, wherein the cutting device comprises a control unit which is operationally connected to the pressing drive, wherein the control unit is arranged to control the pressing drive to move the pressing device from the clearance position in the pressing direction to press the first lateral edge onto the support surface,
preferably wherein the cutting device comprises a lateral drive for moving the pressing device in the cutting direction along the cutting line, and wherein the control unit is operationally connected to said lateral drive, wherein the control unit is arranged to control the pressing drive and the lateral drive to subsequently:
a) position the pressing device into the clearance position at the clearance height upstream of the tire component relative to the cutting direction;
b) move the pressing device in the cutting direction up to the first lateral edge;
c) move the pressing device from the clearance position in the pressing direction to press the first lateral edge onto the support surface(20); and
d) move the pressing device in the cutting direction from the first lateral edge towards the second lateral edge while applying a pressure force to the tire component in the pressing direction,
more preferably wherein the cutting device is arranged to receive the tire component with the first lateral edge aligned along a lateral reference line, and wherein the control unit is arranged to, in step b), move the pressing device in the cutting direction up to the lateral reference line before moving the pressing device in the pressing direction.

4. Cutting device according to claim 3, wherein the cutting device comprises a sensor for detecting the first lateral edge, wherein the sensor is operationally connected to the control unit.

5. Cutting device according to claim 1, wherein the cutting device comprises a guide rail extending over the cutting line along a guide curve, and wherein the pressing device comprises a guide follower for cooperating with said guide rail, wherein the guide curve is shaped to move the pressing device from the clearance position in the pressing direction at the first lateral edge.

6. Cutting device according to any one of the claims 1-5, wherein the pressing device is arranged upstream of the cutter in the cutting direction, and wherein the pressing device and the cutter are arranged to move together in the cutting direction along at least a part of the cutting line.

7. Cutting device according to any one of the claims 1-6, wherein the cutter is a blade comprising a blade body, wherein said blade comprises a first blade surface facing away from the support plane and a second blade surface opposite to the first blade surface with respect to the blade body and facing towards the support plane, wherein the first blade surface and the second blade surface terminate in a cutting edge, wherein the cutting edge extends at an acute skive angle with respect to the support plane, and wherein the cutting edge extends away from the cutting line at an oblique blade angle at a first side of said cutting line.

8. Cutting device according to any one of the claims 1-7, wherein the cutting device further comprises a conveyor for conveying the tire component in a transport direction transverse or perpendicular to the cutting line, wherein the conveyor forms at least a part of the support surface,
preferably wherein the pressing device is arranged upstream of the cutting line in the transport direction.

9. Cutting device according to any one of the preceding claims, wherein the support surface is provided with one or more retaining members for retaining the tire component at or near the cutting line, and wherein the pressing device is movable along the cutting line for pressing the tire component onto said one or more retaining members,
preferably wherein the one or more retaining members are arranged to retain a preselection of one or more regions of the tire component which are distributed in the cutting direction along the cutting line.

10. Cutting device according to any one of the claims 1-9, wherein the clearance height is more than five millimetres, preferably between ten and one hundred millimetres, more preferably between twenty and eighty millimetres, most preferably, between twenty-five and sixty millimetres.

11. Cutting device according to any one of the claims 1-10, wherein the pressing device comprises a pressing roller or pressing wheel which is rotatable about a rotation axis that extends transverse to the cutting line and parallel to the support plane, wherein the pressing roller or pressing wheel is arranged to roll over the tire component in the cutting direction, preferably while a pressing force is applied to said pressing roller or pressing wheel in the pressing direction.

12. Method for cutting a tire component along a cutting line, wherein the method comprises the steps of:
a) providing the tire component at the cutting line on a support surface extending in a support plane;
b) pressing a first lateral edge of the tire component onto the support surface at the cutting line by moving a pressing device in a pressing direction transverse to the support plane;
c) moving the pressing device along the cutting line from the first lateral edge to a second lateral edge of the tire component opposite to the first lateral edge while applying a pressing force onto said pressing device in the pressing direction; and
d) cutting through the tire component along the cutting line.

13. Method according to claim 12, wherein the support surface comprises one or more retaining members at the cutting line for retaining the tire component, wherein step b) comprises pressing the tire component on the one or more retaining members,
and/or wherein step a) comprises aligning the first lateral edge along a lateral reference line.

14. Method according to claim 12 or 13 wherein the method, prior to step b), comprises the step of detecting the first lateral edge.

15. Method according to any one of the claims 12-14, wherein the method comprises using the cutting device according to any one of the claims 1-11.

## Patentansprüche

1. Schneidvorrichtung zum Schneiden einer Reifenkomponente, die eine erste Seitenkante und eine zweite Seitenkante aufweist, die der ersten Seitenkante gegenüberliegt, wobei die Schneidvorrichtung eine Aufnahmefläche (20) zum Aufnehmen der Reifenkomponente in einer Aufnahmeebene (P) umfasst,
wobei die Schneidvorrichtung weiter ein Schneidwerkzeug (8) umfasst, das in einer Schneidrichtung entlang einer Schneidlinie (K) bewegbar ist, um durch die Reifenkomponente auf der Aufnahmefläche von der ersten Seitenkante zur zweiten Seitenkante zu schneiden,
wobei die Schneidvorrichtung weiter eine Andrückvorrichtung (4) umfasst, die in der Schneidrichtung entlang der Schneidlinie (K) bewegbar ist, um die Reifenkomponente auf die Aufnahmefläche (20) anzudrücken,
**dadurch gekennzeichnet, dass** die Schneidvorrichtung eingerichtet ist, die Andrückvorrichtung (4) aktiv in einer Andrückrichtung transversal oder senkrecht zur Aufnahmefläche (P) aus einer Freigabeposition in einer Freigabehöhe von der Aufnahmefläche (P) in Richtung der Aufnahmefläche (P) zu bewegen.

2. Schneidvorrichtung nach Anspruch 1, wobei die Schneidvorrichtung einen Andrückantrieb zum Antreiben einer Bewegung der Andrückvorrichtung in Andrückrichtung umfasst, wobei vorzugsweise der Andrückantrieb einen pneumatischen Aktuator, einen Servomotor, eine Nockenwelle oder ein Nockenrad umfasst.

3. Schneidvorrichtung nach Anspruch 2, wobei die Schneidvorrichtung eine Kontrolleinheit umfasst, die funktional mit dem Andrückantrieb verbunden ist, wobei die Kontrolleinheit eingerichtet ist, den Andrückantrieb zu steuern, um die Andrückvorrichtung aus der Freigabeposition in Andrückrichtung zu bewegen, um die erste Seitenkante auf die Aufnahmefläche zu drücken,
wobei die Schneidvorrichtung vorzugsweise einen Seitenantrieb zum Bewegen der Andrückvorrichtung in Schneidrichtung entlang der Schneidlinie umfasst, und wobei die Kontrolleinheit funktional mit dem Seitenantrieb verbunden ist, wobei die Kontrolleinheit ausgelegt ist, den Andrückantrieb und den Seitenantrieb zu steuern, um anschließend:
a) die Andrückvorrichtung in die Freigabeposition in der Freigabehöhe oberhalb der Reifenkomponente relativ zur Schneidrichtung zu positionieren;
b)die Andrückvorrichtung in Schneidrichtung bis zur ersten Seitenkante zu bewegen;
c) die Andrückvorrichtung aus der Freigabeposition in Andrückrichtung zu bewegen, um die erste Seitenkante auf die Aufnahmefläche (20) zu drücken; und
d) die Andrückvorrichtung in der Schneidrichtung von der ersten Seitenkante in Richtung der zweiten Seitenkante zu bewegen, während eine Andrückkraft in Andrückrichtung auf die Reifenkomponente ausgeübt ist,
wobei mehr vorzugsweise die Schneidvorrichtung eingerichtet ist, die Reifenkomponente mit der ersten Seitenkante ausgerichtet entlang einer seitlichen Referenzlinie aufzunehmen, und
wobei die Steuereinheit ausgelegt ist, in Schritt b) die Andrückvorrichtung in Schneidrichtung bis zur seitlichen Referenzlinie zu bewegen, bevor die Andrückvorrichtung in Andrückrichtung bewegt wird.

4. Schneidvorrichtung nach Anspruch 3, wobei die Schneidvorrichtung einen Sensor zum Detektieren der ersten Seitenkante umfasst, wobei der Sensor funktional mit der Steuereinheit verbunden ist.

5. Schneidvorrichtung nach Anspruch 1, wobei die Schneidvorrichtung eine Führungsschiene umfasst, die sich entlang einer Führungskurve über die Schneidlinie erstreckt, und wobei die Andrückvorrichtung einen Führungsmitnehmer um mit der Führungsschiene zusammenzuwirken umfasst, wobei die Führungskurve geformt ist, die Andrückvorrichtung aus der Freigabeposition in Andrückrichtung an der ersten Seitenkante zu bewegen.

6. Schneidvorrichtung nach einem der Ansprüche 1 bis 5, wobei die Andrückvorrichtung in Schneidrichtung oberhalb des Schneidwerkzeugs angeordnet ist und wobei die Andrückvorrichtung und das Schneidwerkzeug eingerichtet sind, sich gemeinsam entlang zumindest eines Teils der Schneidlinie in Schneidrichtung zu bewegen.

7. Schneidvorrichtung nach einem der Ansprüche 1 bis 6, wobei das Schneidwerkzeug eine Klinge ist, die einen Klingenkörper umfasst, wobei die Klinge eine erste Klingenfläche, die von der Aufnahmeebene weg zeigt, und eine zweite Klingenfläche umfasst, die der ersten Klingenfläche in Bezug auf den Klingenkörper gegenüberliegt und in Richtung der Aufnahmeebene zeigt, wobei die erste Klingenfläche und die zweite Klingenfläche in einer Schneidkante enden, wobei sich die Schneidkante in einem spitzen Abschrägungswinkel in Bezug auf die Aufnahmeebene erstreckt, und wobei sich die Schneidkante von der Schneidlinie in einem schrägen Klingenwinkel an einer ersten Seite der Schneidlinie weg erstreckt.

8. Schneidvorrichtung nach einem der Ansprüche 1 bis 7, wobei die Schneidvorrichtung weiter ein Fördermittel zum Befördern der Reifenkomponente in einer Transportrichtung transversal oder senkrecht zur Schneidlinie umfasst, wobei das Fördermittel zumindest einen Teil der Aufnahmefläche bildet,
wobei vorzugsweise die Andrückvorrichtung in Transportrichtung oberhalb der Schneidlinie angeordnet ist.

9. Schneidvorrichtung nach einem der vorstehenden Ansprüche, wobei die Aufnahmefläche mit einem oder mehreren Halteelementen zum Halten der Reifenkomponente an oder nahe der Schneidlinie versehen ist und wobei die Andrückvorrichtung entlang der Schneidlinie bewegbar ist, um die Reifenkomponente auf das eine oder die mehreren Halteelemente anzudrücken,
wobei vorzugsweise das eine oder die mehreren Halteelemente eingerichtet sind, eine Vorauswahl aus einem oder mehreren Regionen der Reifenkomponente, die in der Schneidrichtung entlang der Schneidlinie verteilt sind, zu halten.

10. Schneidvorrichtung nach einem der Ansprüche 1 bis 9, wobei die Freigabehöhe mehr als fünf Millimeter, vorzugsweise zwischen zehn und hundert Millimeter, noch bevorzugter zwischen zwanzig und achtzig Millimeter, am meisten bevorzugt zwischen fünfundzwanzig und sechzig Millimeter beträgt.

11. Schneidvorrichtung nach einem der Ansprüche 1 bis 10, wobei die Andrückvorrichtung eine Andrückrolle oder ein Andrückrad umfasst, die um eine Drehachse drehbar ist, die sich transversal zur Schneidlinie und parallel zur Aufnahmeebene erstreckt, wobei die Andrückrolle oder das Andrückrad eingerichtet ist, in der Schneidrichtung über die Reifenkomponente zu rollen, vorzugsweise während eine Andrücckraft in Andrückrichtung auf die Andrückrolle oder das Andrückrad ausgeübt ist.

12. Verfahren zum Schneiden einer Reifenkomponente entlang einer Schneidlinie, wobei das Verfahren die folgenden Schritte umfasst:
a) Bereitstellen der Reifenkomponente an der Schneidlinie auf einer Aufnahmefläche, die sich in einer Aufnahmeebene erstreckt;
b) Andrücken einer ersten Seitenkante der Reifenkomponente auf die Aufnahmefläche an der Schneidlinie durch Bewegen einer Andrückvorrichtung in einer Andrückrichtung transversal zur Aufnahmeebene;
c) Bewegen der Andrückvorrichtung entlang der Schneidlinie von der ersten Seitenkante zu einer zweiten Seitenkante der Reifenkomponente, die der ersten Seitenkante gegenüberliegt, während eine Andrückkraft in Andrückrichtung auf die Andrückvorrichtung ausgeübt ist; und
d) Schneiden durch die Reifenkomponente entlang der Schneidlinie.

13. Verfahren nach Anspruch 12, wobei die Aufnahmefläche ein oder mehrere Halteelemente an der Schneidlinie zum Halten der Reifenkomponente umfasst, wobei Schritt b) das Andrücken der Reifenkomponente an das eine oder die mehreren Halteelemente umfasst,
und/oder wobei Schritt a) das Ausrichten der ersten Seitenkante entlang einer seitlichen Referenzlinie umfasst.

14. Verfahren nach Anspruch 12 oder 13, wobei das Verfahren vor Schritt b) den Schritt des Detektierens der ersten Seitenkante umfasst.

15. Verfahren nach einem der Ansprüche 12 bis 14, wobei das Verfahren die Verwendung der Schneidevorrichtung nach einem der Ansprüche 1 bis 11 umfasst.

## Revendications

1. Dispositif de coupe pour couper un composant de pneu ayant un premier bord latéral et un second bord latéral opposé audit premier bord latéral, le dispositif de coupe comprenant une surface de support (20) pour supporter le composant de pneu dans un plan de support (P), le dispositif de coupe comprenant en outre un organe de coupe (8) qui est mobile dans une direction de coupe le long d'une ligne de coupe (K) pour couper le composant de pneu sur la surface de support du premier bord latéral au second bord latéral, le dispositif de coupe comprenant en outre un dispositif de pression (4) qui est mobile dans la direction de coupe le long de la ligne de coupe (K) pour presser le composant de pneu sur la surface de support (20), **caractérisé par le fait que** le dispositif de coupe est disposé pour déplacer activement le dispositif de pression (4) vers le plan de support (P) dans une direction de pression transversale ou perpendiculaire au plan de support (P) à partir d'une position de dégagement à une hauteur de dégagement à partir dudit plan de support (P).

2. Dispositif de coupe selon la revendication 1, dans lequel le dispositif de coupe comprend un entraînement de pression pour entraîner un mouvement du dispositif de pression dans la direction de pression,
de préférence, dans lequel l'entraînement de pression comprend un actionneur pneumatique, un servomoteur, un arbre à came ou une roue à came.

3. Dispositif de coupe selon la revendication 2, dans lequel le dispositif de coupe comprend une unité de commande qui est connectée de manière opérationnelle à l'entraînement de pression, l'unité de commande étant disposée pour commander l'entraînement de pression pour déplacer le dispositif de pression à partir de la position de dégagement dans la direction de pression pour presser le premier bord latéral sur la surface de support,
de préférence, dans lequel le dispositif de coupe comprend un entraînement latéral pour déplacer le dispositif de pression dans la direction de coupe le long de la ligne de coupe, et dans lequel l'unité de commande est connectée de manière opérationnelle audit entraînement latéral, l'unité de commande étant disposée pour commander l'entraînement de pression et l'entraînement latéral pour ensuite:
a) positionner le dispositif de pression dans la position de dégagement à la hauteur de dégagement en amont du composant de pneu par rapport à la direction de coupe;
b) déplacer le dispositif de pression dans la direction de coupe jusqu'au premier bord latéral;
c) déplacer le dispositif de pression de la position de dégagement dans la direction de pression pour presser le premier bord latéral sur la surface de support (20); et
d) déplacer le dispositif de pression dans la direction de coupe à partir du premier bord latéral vers le second bord latéral tout en appliquant une force de pression au composant de pneu dans la direction de pression,
de façon davantage préférée, dans lequel le dispositif de coupe est disposé pour recevoir le composant de pneu avec le premier bord latéral aligné le long d'une ligne de référence latérale, et dans lequel l'unité de commande est disposée pour, à l'étape b), déplacer le dispositif de pression dans la direction de coupe jusqu'à la ligne de référence latérale avant de déplacer le dispositif de pression dans la direction de pression.

4. Dispositif de coupe selon la revendication 3, dans lequel le dispositif de coupe comprend un capteur pour détecter le premier bord latéral, le capteur étant connecté de manière opérationnelle à l'unité de commande.

5. Dispositif de coupe selon la revendication 1, dans lequel le dispositif de coupe comprend un rail de guidage s'étendant sur la ligne de coupe le long d'une courbe de guidage, et dans lequel le dispositif de pression comprend un suiveur de guidage pour coopérer avec ledit rail de guidage, dans lequel la courbe de guidage est formée pour déplacer le dispositif de pression à partir de la position de dégagement dans la direction de pression au premier bord latéral.

6. Dispositif de coupe selon l'une quelconque des revendications 1 à 5, dans lequel le dispositif de pression est disposé en amont de l'organe de coupe dans la direction de coupe, et dans lequel le dispositif de pression et l'organe de coupe sont disposés pour se déplacer ensemble dans la direction de coupe le long d'au moins une partie de la ligne de coupe.

7. Dispositif de coupe selon l'une quelconque des revendications 1 à 6, dans lequel l'organe de coupe est une lame comprenant un corps de lame, dans lequel ladite lame comprend une première surface de lame orientée à l'opposé du plan de support et une seconde surface de lame opposée à la première surface de lame par rapport au corps de lame et orientée vers le plan de support, dans lequel la première surface de lame et la seconde surface de lame se terminent en un bord de coupe, dans lequel le bord de coupe s'étend à un angle de coupe aigu par rapport au plan de support, et dans lequel le bord de coupe s'étend à distance de la ligne de coupe à un angle de lame oblique à un premier côté de ladite ligne de coupe.

8. Dispositif de coupe selon l'une quelconque des revendications 1 à 7, dans lequel le dispositif de coupe comprend en outre un transporteur pour transporter le composant de pneu dans une direction de transport transversale ou perpendiculaire à la ligne de coupe, dans lequel le transporteur forme au moins une partie de la surface de support,
de préférence, dans lequel le dispositif de pression est disposé en amont de la ligne de coupe dans la direction de transport.

9. Dispositif de coupe selon l'une quelconque des revendications précédentes, dans lequel la surface de support comporte un ou plusieurs éléments de retenue pour retenir le composant de pneu à ou à proximité de la ligne de coupe, et dans lequel le dispositif de pression est mobile le long de la ligne de coupe pour presser le composant de pneu sur ledit ou lesdits éléments de retenue,
de préférence, dans lequel le ou les éléments de retenue sont disposés pour retenir une présélection d'une ou plusieurs régions du composant de pneu qui sont réparties dans la direction de coupe le long de la ligne de coupe.

10. Dispositif de coupe selon l'une quelconque des revendications 1 à 9, dans lequel la hauteur de dégagement est supérieure à cinq millimètres, de préférence entre dix et cent millimètres, de façon davantage préférée entre vingt et quatre-vingts millimètres, de la façon que l'on préfère le plus entre vingt-cinq et soixante millimètres.

11. Dispositif de coupe selon l'une quelconque des revendications 1 à 10, dans lequel le dispositif de pression comprend un rouleau de pression ou une roue de pression qui est apte à tourner autour d'un axe de rotation qui s'étend transversalement à la ligne de coupe et parallèlement au plan de support, dans lequel le rouleau de pression ou la roue de pression est disposé(e) pour rouler sur le composant de pneu dans la direction de coupe, de préférence alors qu'une force de pression est appliquée audit rouleau de pression ou à ladite roue de pression dans la direction de pression.

12. Procédé de coupe d'un composant de pneu le long d'une ligne de coupe, dans lequel le procédé comprend les étapes de:
a) disposer le composant de pneu à la ligne de coupe sur une surface de support s'étendant dans un plan de support;
b) presser un premier bord latéral du composant de pneu sur la surface de support à la ligne de coupe par déplacement d'un dispositif de pression dans une direction de pression transversale au plan de support;
c) déplacer le dispositif de pression le long de la ligne de coupe du premier bord latéral à un second bord latéral du composant de pneu opposé au premier bord latéral tout en appliquant une force de pression sur ledit dispositif de pression dans la direction de pression; et
d) couper le composant de pneu le long de la ligne de coupe.

13. Procédé selon la revendication 12, dans lequel la surface de support comprend un ou plusieurs éléments de retenue à la ligne de coupe pour retenir le composant de pneu, dans lequel l'étape b) comprend la pression du composant de pneu sur le ou les éléments de retenue, et/ou
dans lequel l'étape a) comprend l'alignement du premier bord latéral le long d'une ligne de référence latérale.

14. Procédé selon la revendication 12 ou 13, dans lequel le procédé, avant l'étape b), comprend l'étape de détection du premier bord latéral.

15. Procédé selon l'une quelconque des revendications 12 à 14, dans lequel le procédé comprend l'utilisation du dispositif de coupe selon l'une quelconque des revendications 1 à 11.
